# EUROPÄISCHE PATENTSCHRIFT

(11) **EP 3 410 145 B1**
(45) Veröffentlichungstag und Bekanntmachung des Hinweises auf die Patenterteilung: **24.04.2024**
(21) Anmeldenummer: 18174502.7
(22) Anmeldetag: 28.05.2018
(51) Int. Cl.: G01S 7/40, G01S 13/87, G01S 13/931, G01S 13/93

(54) **VERFAHREN ZUM KALIBRIEREN EINES RADARSENSORS EINES KRAFTFAHRZEUGS WÄHREND EINER BEWEGUNG DES KRAFTFAHRZEUGS, RADARSENSOR, FAHRERASSISTENZSYSTEM SOWIE KRAFTFAHRZEUG**
METHOD FOR CALIBRATING A RADAR SENSOR OF A MOTOR VEHICLE DURING A MOVEMENT OF THE MOTOR VEHICLE, RADAR SENSOR, DRIVER ASSISTANCE SYSTEM AND MOTOR VEHICLE
PROCÉDÉ D'ÉTALONNAGE D'UN CAPTEUR RADAR D'UN VÉHICULE AUTOMOBILE LORS D'UN MOUVEMENT DE VÉHICULE AUTOMOBILE, CAPTEUR RADAR, SYSTÈME D'AIDE À LA CONDUITE ET VÉHICULE AUTOMOBILE

(30) Priorität: 31.05.2017 DE 102017111860
(43) Veröffentlichungstag der Anmeldung: 05.12.2018
(73) Patentinhaber: Valeo Schalter und Sensoren GmbH, 74321 Bietigheim-Bissingen (DE)
(72) Erfinder: Sturm, Christian, 74321 Bietigheim-Bissingen (DE); Pineau, Julien, 29200 Brest (FR)
(74) Vertreter: Withopf, Kristina

(56) Entgegenhaltungen:
- WO-A1-2016/025683
- WO-A1-2017/080791
- DE-A1-102009 046 124
- US-A- 5 495 254

## Beschreibung

Die vorliegende Erfindung betrifft ein Verfahren zum Kalibrieren eines Radarsensors eines Kraftfahrzeugs, bei welchem mit dem zu kalibrierenden Radarsensor zumindest ein Messzyklus durchgeführt wird, wobei in dem Messzyklus mit dem Radarsensor ein Empfangssignal bestimmt wird, welches eine Mehrzahl von Referenzobjekten, welche sich jeweils an bekannten Positionen in einer Umgebung des Radarsensors befinden, beschreibt. Darüber hinaus wird der Radarsensor anhand des bestimmten Empfangssignals und einer aktuellen Lage des Kraftfahrzeugs, welche eine relative Lage und/oder eine Ausrichtung des Kraftfahrzeugs zu den Referenzobjekten beschreibt, kalibriert. Darüber hinaus betrifft die vorliegende Erfindung einen Radarsensor für ein Kraftfahrzeug. Ferner betrifft die vorliegende Erfindung ein Fahrerassistenzsystem mit zumindest einem solchen Radarsensor. Schließlich betrifft die vorliegende Erfindung ein Kraftfahrzeug mit einem solchen Fahrerassistenzsystem.

Das Interesse richtet sich vorliegend auf Radarsensoren für Kraftfahrzeuge. Diese Radarsensoren werden beispielsweise bei einer Frequenz von ca. 24 GHz oder ca. 79 GHz betrieben. Die Radarsensoren dienen im Allgemeinen zur Detektion eines Objekts in einem Umgebungsbereich des Kraftfahrzeugs. Die Radarsensoren können Teil von unterschiedlichen Fahrerassistenzsystemen sein, die den Fahrer beim Führen des Kraftfahrzeugs unterstützen. Radarsensoren messen einerseits den Abstand zwischen dem Objekt und dem Kraftfahrzeug. Andererseits messen die Radarsensoren auch die Relativgeschwindigkeit zu dem Objekt beziehungsweise die Radialgeschwindigkeit des Objekts. Ferner messen die Radarsensoren auch einen sogenannten Zielwinkel, also einen Winkel zwischen einer gedachten Verbindungslinie zu dem Objekt und einer Referenzlinie, etwa der Fahrzeuglängsachse.

Radarsensoren werden üblicherweise hinter dem Stoßfänger platziert, beispielsweise in den jeweiligen Eckbereichen des Stoßfängers. Zur Detektion des Objekts sendet der Radarsensor ein Radarsignal in Form einer elektromagnetischen Welle aus. Dieses Radarsignal wird dann an dem zu detektierenden Objekt reflektiert und wird wieder von dem Radarsensor als Echo empfangen. Vorliegend gilt das Interesse insbesondere den sogenannten Frequenzmodulations-Dauerstrich-Radarsensoren, die auch als Frequency Modulated Continuous Wave Radar oder als FMCW-Radar bezeichnet werden. Dabei umfasst das Radarsignal üblicherweise eine Sequenz von frequenzmodulierten Chirpsignalen, welche der Reihe nach ausgesendet werden. Zum Erhalten eines Empfangssignals wird das reflektierte Radarsignal dabei zunächst in das Basisband herabgemischt und anschließend mittels eines Analog-Digital-Wandlers abgetastet. Somit kann eine Reihe von Abtastwerten bereitgestellt werden. Diese Abtastwerte des Empfangssignals werden dann mittels einer elektronischen Recheneinrichtung verarbeitet. Diese Recheneinrichtung, die beispielsweise einen digitalen Signalprozessor umfasst, ist insbesondere in den Radarsensor integriert.

Nach der Fertigung des Kraftfahrzeugs beziehungsweise nach dem Einbau der Radarsensoren ist es erforderlich, die Radarsensoren entsprechend zu kalibrieren. Hier ist es insbesondere vorgesehen, dass die Radarsensoren bezüglich einer Winkelmessung kalibriert werden. Hierzu sind aus dem Stand der Technik verschiedene Verfahren zum Kalibrieren der Radarsensor bekannt. Dabei kann es beispielsweise vorgesehen sein, dass ein Referenzobjekt auf einer vorbestimmten Kreisbahn um dem Radarsensor bewegt wird. Ein solches Verfahren wird auch als Arctest bezeichnet.

Darüber hinaus beschreibt die DE 10 2012 102 769 A1 ein Verfahren zur virtuellen Ausrichtung von Objekterfassungssensoren an einem Fahrzeug. Dabei wird eine Sensorfehlausrichtungsbedingung während einer normalen Fahrt mit dem Fahrzeug erkannt. Des Weiteren ist es vorgesehen, dass eine Ausrichtungskalibrierung durch Fahren des Fahrzeugs in einer kontrollierten Umgebung unter Folgen eines Führungsfahrzeugs verfeinert wird.

Darüber hinaus beschreibt die WO 2016/025683 A1 ein Verfahren zur Kalibrierung von einem Radarsensor in einem Fahrzeug. Bei dem Verfahren wird ein Fahrzeug in einer Teststation positioniert. In der Umgebung des Fahrzeugs befindet sich eine Mehrzahl von Targets mit unterschiedlichen vertikalen und horizontalen Abständen zum Fahrzeug. Dabei sind die jeweiligen Positionen der Targets bekannt. Dadurch, dass auch die Abstände und die Winkel zu den Targets bekannt sind, können Fehlausrichtungen des Radarsensors in Azimutrichtung und Elevationsrichtung bestimmt werden.

Aus der WO 2017/080791 A1 ist ein Verfahren zur Kalibrierung von einem Radarsensor in einem Fahrzeug bekannt, bei dem während das Fahrzeug relativ zu einem Objekt bewegt wird, eine Referenzlage bestimmt wird, für welche ein Referenzwinkel zwischen dem Sensor und dem Objekt bekannt ist, und der Sensor anhand eines Vergleichs des Messwinkels mit dem Referenzwinkel kalibriert wird.

In der EP3136123 fährt ein Kfz entlang einer Kalibirierstrecke während Abstand bzw. Winkel zu den Zielen bekannten Ortes mit Radarsensoren bestimmt werden, so dass die Einbauposition des Radarsensors ermittelt werden kann und damit die Umrechnung der Radardaten ins Kfz-Koordinatensystem ermöglicht wird.

Es ist Aufgabe der vorliegenden Erfindung, eine Lösung aufzuzeigen, wie ein Radarsensor für ein Kraftfahrzeug nach der Fertigung des Kraftfahrzeugs auf einfache Weise präzise kalibriert werden kann.

Diese Aufgabe wird erfindungsgemäß durch ein Verfahren, durch einen Radarsensor, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß einer Ausführungsform eines Verfahrens zum Kalibrieren eines Radarsensors eines Kraftfahrzeugs wird mit dem zu kalibrierenden Radarsensor zumindest ein Messzyklus durchgeführt. In dem Messzyklus wird von dem Radarsensor bevorzugt ein Empfangssignal bestimmt, welches insbesondere eine Mehrzahl von Referenzobjekten, welche sich insbesondere an bekannten Positionen in einer Umgebung des Radarsensors befinden, beschreibt. Darüber hinaus wird der Radarsensor bevorzugt anhand des bestimmten Empfangssignals und einer aktuellen Lage des Kraftfahrzeugs, welche insbesondere eine relative Lage und/oder eine Ausrichtung des Kraftfahrzeugs zu den Referenzobjekten beschreibt, kalibriert. Dabei ist es insbesondere vorgesehen, dass das Kraftfahrzeug während des Kalibrierens relativ zu den Referenzobjekten bewegt wird. Des Weiteren wird bei diesem Bewegen in dem zumindest einen Messzyklus bevorzugt anhand des Empfangssignals und der bekannten Positionen der Referenzobjekte die aktuelle Lage des Kraftfahrzeugs bestimmt.

Ein erfindungsgemäßes Verfahren dient zum Kalibrieren eines Radarsensors eines Kraftfahrzeugs. Hierbei wird mit dem zu kalibrierenden Radarsensor zumindest ein Messzyklus durchgeführt, wobei in den Messzyklus ein Empfangssignal bestimmt wird, welches eine Mehrzahl von Referenzobjekten, welche sich jeweils an bekannten Positionen in einer Umgebung des Radarsensors befinden, beschreibt. Ferner wird der Radarsensor anhand des bestimmten Empfangssignals und einer aktuellen Lage des Kraftfahrzeugs, welche eine relative Lage und/oder eine Ausrichtung des Kraftfahrzeugs relativ zu den Referenzobjekten beschreibt, kalibriert. Dabei ist es vorgesehen, dass das Kraftfahrzeug während des Kalibrierens relativ zu den Referenzobjekten bewegt wird. Des Weiteren wird bei diesem Bewegen in dem zumindest einen Messzyklus anhand des Empfangssignals und der bekannten Positionen der Referenzobjekte die aktuelle Lage des Kraftfahrzeugs bestimmt.

Mithilfe des Verfahrens soll ein Radarsensor für ein Kraftfahrzeug kalibriert werden. Ein solcher Radarsensor dient insbesondere dazu, Objekte in der Umgebung des Kraftfahrzeugs beziehungsweise des Radarsensors zu erfassen. Beispielsweise kann der Radarsensor Teil eines Fahrerassistenzsystems des Kraftfahrzeugs sein. Mithilfe des Radarsensors können einerseits Abstände beziehungsweise Entfernungen zu Objekten bestimmt werden. Der Radarsensor weist zumindest eine Sendeantenne auf, mit der ein Radarsignal in Form einer elektromagnetischen Welle ausgesendet werden kann. Darüber hinaus weist der Radarsensor zumindest eine Empfangsantenne auf, mittels welcher das von dem Objekt reflektierte Radarsignal wieder empfangen werden kann. Anhand der Laufzeit zwischen dem Aussenden des Radarsignals und dem Empfangen des von dem Objekt reflektierten Radarsignals kann dann die Entfernung zu dem Objekt bestimmt werden. Dabei ist es ferner vorgesehen, dass mit dem Radarsensor ein Winkel zwischen dem Kraftfahrzeug und dem Objekt bestimmt werden kann. Zu diesem Zweck kann der Radarsensor mehrere Empfangsantennen aufweisen, wobei anhand einer Phasendifferenz des von dem Objekt reflektierten und empfangenen Radarsignals an den jeweiligen Empfangsantennen der Winkel bestimmt werden kann.

Nach der Fertigung des Kraftfahrzeugs beziehungsweise am Ende der Produktionslinie ist es erforderlich, den Radarsensor zu kalibrieren. Dabei ist es insbesondere vorgesehen, den Radarsensor bezüglich der Winkelmessung zu kalibrieren. Zum Kalibrieren des Radarsensors werden eine Mehrzahl von Referenzobjekten beziehungsweise Reflektoren verwendet, welche sich in der Umgebung des Radarsensors beziehungsweise des Kraftfahrzeugs befinden. Diese Referenzobjekte reflektieren das ausgesendete Radarsignal des Radarsensors. Dabei sind die jeweiligen Positionen der Referenzobjekte bekannt beziehungsweise in dem Radarsensor hinterlegt. Zum Kalibrieren des Radarsensors wird mit dem Radarsensor zumindest ein Messzyklus durchgeführt. Während des Messzyklus wird mit dem Radarsensor insbesondere ein Radarsignal ausgesendet und die von den jeweiligen Referenzobjekten reflektierten Radarsignale wieder empfangen. Mit dem Radarsensor wird dann das Empfangssignal bereitgestellt, welches die Referenzobjekte beschreibt. Dabei kann das Empfangssignal die Abstände beziehungsweise die Entfernungen zu den jeweiligen Referenzobjekten beschreiben. Zudem kann das Empfangssignal die Winkel zwischen dem Radarsensor und den jeweiligen Referenzobjekten beschreiben.

Gemäß einem wesentlichen Aspekt der vorliegenden Erfindung ist es vorgesehen, dass das Kraftfahrzeug während des Kalibrierens relativ zu den Referenzobjekten bewegt wird. Dabei kann es beispielsweise vorgesehen sein, dass das Kraftfahrzeug während des Kalibrierens manuell von einem Fahrer des Kraftfahrzeugs manövriert wird. Es kann auch vorgesehen sein, dass das Kraftfahrzeug autonom oder semi-autonom mithilfe eines Fahrerassistenzsystems manövriert wird. Dabei wird der zumindest eine Messzyklus durchgeführt, während das Kraftfahrzeug relativ zu den Referenzobjekten bewegt wird. Anhand des Empfangssignals, das von dem Radarsensor bereitgestellt wird, wird dann die aktuelle Lage des Kraftfahrzeugs bestimmt. Die aktuelle Lage des Kraftfahrzeugs beschreibt die relative Lage zwischen dem Kraftfahrzeug und den jeweiligen Referenzobjekten und/oder die Ausrichtung des Kraftfahrzeugs zu den Referenzobjekten. Da die Einbauposition und/oder der Einbauwinkel des Radarsensors an dem Kraftfahrzeug bekannt sind, können anhand der aktuellen Lage des Kraftfahrzeugs auch die relative Lage des Radarsensors zu den Referenzobjekten und/oder die Ausrichtung des Radarsensors zu den Referenzobjekten bestimmt werden. Das Empfangssignal, welches in dem Messzyklus bestimmt wird, beschreibt beispielsweise die jeweiligen Entfernungen zu den Referenzobjekten. Somit kann beispielsweise auf Grundlage von Lateration beziehungsweise Trilateration die aktuelle Lage des Kraftfahrzeugs bestimmt werden. Damit ist es beispielsweise nicht erforderlich, dass das Kraftfahrzeug relativ zu den Referenzobjekten ausgerichtet wird. Somit kann die aktuelle Lage des Kraftfahrzeugs auf Grundlage des Empfangssignals selbst bestimmt werden. Dies ermöglicht eine einfache und dennoch präzise Kalibrierung des Radarsensors.

Erfindungsgemäß umfasst das Empfangssignal Entfernungswerte, welche jeweils eine Entfernung zwischen dem Radarsensor und einem der Referenzobjekte beschreiben, und die aktuelle Lage des Kraftfahrzeugs wird anhand der jeweiligen Entfernungswerte bestimmt. Wie bereits erläutert, wird das Kraftfahrzeug während des Kalibrierens relativ zu den Referenzobjekten bewegt. In dem Messzyklus wird dann das Empfangssignal bereitgestellt, welches eine Mehrzahl der Referenzobjekte beschreibt. Dabei beschreibt das Empfangssignal Entfernungswerte, welche jeweils einen Abstand zwischen dem Radarsensor und einem der Referenzobjekte beschreiben. Somit kann die aktuelle Lage des Kraftfahrzeugs auf Grundlage von Lateration bestimmt werden. Hierbei wird berücksichtigt, dass jeweiligen Entfernungswerte, welche auf Grundlage der Laufzeit des Radarsignals bestimmt wurden, die Entfernung zwischen dem Radarsensor und den jeweiligen Referenzobjekten genau beschreiben. Insbesondere erfolgt bezüglich der Entfernungsmessung keine Kalibrierung des Radarsensors.

Weiterhin ist es vorteilhaft, wenn während des Bewegens des Kraftfahrzeugs mittels Odometrie eine vorläufige Lage des Kraftfahrzeugs bestimmt wird und die Referenzobjekte für die vorläufige Lage anhand des Empfangssignals erkannt werden. Während des Kalibrierens kann die Bewegung des Kraftfahrzeugs fortlaufend erfasst werden. Hierzu können die Umdrehungen zumindest eines Rades des Kraftfahrzeugs sowie ein Lenkwinkel beziehungsweise ein Drehwinkel des Kraftfahrzeugs fortlaufend erfasst werden. Mithilfe dieser Odometrie kann dann eine vorläufige Lage des Kraftfahrzeugs bestimmt werden. Diese vorläufige Lage kann beispielsweise ausgehend von einem bekannten Startpunkt bestimmt werden. Sobald der Messzyklus durchgeführt wurde, kann dann die vorläufige Lage bestimmt werden. Ausgehend von der vorläufigen Lage können dann die Referenzobjekte anhand des Empfangssignals identifiziert beziehungsweise erkannt werden. Dabei kann es vorgesehen sein, dass sich in der Umgebung des Kraftfahrzeugs eine Mehrzahl von Referenzobjekte befindet und das Empfangssignal nur einige der Referenzobjekte beschreibt. Auf Grundlage der vorläufigen Lage kann abgeschätzt werden, wo sich das Kraftfahrzeug aktuell befindet. Ausgehend von dieser vorläufigen Lage können dann die Referenzobjekte identifiziert werden, welche von dem Empfangssignal beschrieben werden.

Dabei ist es insbesondere vorgesehen, dass zum Bestimmen der aktuellen Lage die vorläufige Lage anhand der jeweiligen Entfernungswerte und den bekannten Positionen der Referenzobjekte korrigiert wird. Nachdem die in dem Empfangssignal beschriebenen Referenzobjekte identifiziert wurden, kann anhand der Entfernungswerte der jeweilige Abstand zwischen dem Radarsensor und den identifizierten Referenzobjekten bestimmt werden. Anhand von Lateration kann dann die aktuelle Lage des Kraftfahrzeugs bestimmt werden beziehungsweise die vorläufige Lage des Kraftfahrzeugs korrigiert werden. Somit kann auf zuverlässige Weise die relative Lage des Kraftfahrzeugs zu den identifizierten Referenzobjekten und/oder die Ausrichtung des Kraftfahrzeugs bezüglich der identifizierten Referenzobjekte bestimmt werden.

Gemäß einer Ausführungsform werden mit zumindest einem weiteren Umfeldsensor Sensordaten bereitgestellt, welche die Referenzobjekte beschreiben, und die aktuelle Lage wird zusätzlich anhand der Sensordaten bestimmt. Bei dem weiteren Umfeldsensor kann es sich beispielsweise um einen Ultraschallsensor, einen Lidar-Sensor, einen Laserscanner oder um eine Kamera handeln. Bevorzugt ist es aber vorgesehen, dass es sich bei dem weiteren Umfeldsensor um einen Radarsensor handelt. Die Sensordaten, die mit dem weiteren Umfeldsensor bereitgestellt werden, beschreiben insbesondere die relative Lage zwischen dem weiteren Umfeldsensor und den Referenzobjekten. Wenn zusätzlich die Sensordaten des weiteren Umfeldsensors herangezogen werden, kann die aktuelle Lage des Kraftfahrzeugs präzise bestimmt werden.

Erfindungsgemäß ist es vorgesehen, dass das Empfangssignal zumindest einen Winkelwert umfasst, welcher einen Winkel zwischen dem Radarsensor und einem der Referenzobjekte beschreibt, anhand der aktuellen Lage und der bekannten Positionen der Referenzobjekte zumindest ein Winkel zwischen dem Radarsensor und dem einen der Referenzobjekte berechnet wird und der Radarsensor anhand eines Unterschieds zwischen dem Winkelwert und dem berechneten Winkel kalibriert wird. Dabei kann der zumindest eine Winkelwert den Winkel zwischen dem Radarsensor und dem Referenzobjekt in Azimutrichtung und/oder in Elevationsrichtung beschreiben. Anhand der aktuellen Lage, welche bestimmt wurde, und der bekannten Positionen der Referenzobjekte können zudem die jeweiligen Winkel zwischen dem Radarsensor den Referenzobjekten berechnet werden. Anhand des Unterschieds zwischen den Winkelwerten und den korrespondierenden berechneten Winkeln kann dann die Kalibrierung des Radarsensors durchgeführt werden. Beispielsweise können anhand des Unterschieds Kalibrierdaten bestimmt werden, welche dann in einem Speicher des Radarsensors hinterlegt werden.

Dabei ist es insbesondere vorgesehen, dass der zumindest eine Winkelwert einen Phasenunterschied des von dem Referenzobjekt reflektierten Radarsignals zwischen zwei Empfangsantennen des Radarsensors beschreibt. Wie bereits erläutert, kann der Radarsensor mehrere Empfangsantennen aufweisen, um anhand der reflektierten Radarsignale den Winkel anhand des Phasenunterschieds bestimmen zu können. Dabei können die Kalibrierdaten bezüglich der Phasenunterschiede bestimmt werden.

Weiterhin ist es vorteilhaft, wenn das Kraftfahrzeug relativ zu den Referenzobjekten entlang einer Trajektorie manövriert wird und die Sensordaten einigen der Referenzobjekte beschreiben. Zum Kalibrieren des Radarsensors können also eine Mehrzahl von Referenzobjekten bereitgestellt werden, wobei das Kraftfahrzeug entlang einer Trajektorie beziehungsweise entlang eines Parcours zwischen den Referenzobjekten bewegt wird. Dabei ist es insbesondere vorgesehen, dass mit dem Radarsensor während des Bewegens relativ zu den Referenzobjekten eine Mehrzahl von Messzyklen durchgeführt wird. Nach jedem Messzyklus kann dann die aktuelle Lage des Kraftfahrzeugs bestimmt werden und Kalibrierdaten bestimmt werden. Dabei kann es zudem vorgesehen sein, dass die Kalibrierung auf Grundlage eines Mittelwerts der Kalibrierdaten, die in den einzelnen Messzyklen bestimmt wurden, durchgeführt wird.

Vorzugsweise wird zusätzlich zu dem Radarsensor zumindest ein weiterer Radarsensor während des Bewegens des Kraftfahrzeugs relativ zu den Referenzobjekten kalibriert. Mit anderen Worten kann das Verfahren parallel beziehungsweise zeitgleich für mehrere oder alle Radarsensor des Kraftfahrzeugs durchgeführt werden. Insbesondere können mehrere Radarsensoren während des Bewegens des Kraftfahrzeugs relativ zu den Referenzobjekten kalibriert werden. Dabei kann die Trajektorie beziehungsweise der Parcours, welcher durch die Referenzobjekte führt, so gewählt sein, dass sich auf beiden Seiten des Kraftfahrzeugs sowie in Fahrtrichtung vor und/oder hinter dem Kraftfahrzeug Referenzobjekte befinden.

Dabei ist es insbesondere vorgesehen, dass das mit dem weiteren Radarsensor bestimmte Empfangssignal an den Radarsensor übertragen wird und die aktuelle Lage zusätzlich anhand des übertragenen Empfangssignals bestimmt wird. Mit anderen Worten können der Radarsensor und der weitere Radarsensor zur Datenübertragung miteinander verbunden sein. Somit kann das Empfangssignal, das mit dem weiteren Radarsensor während eines Messzyklus bestimmt wurde, an den Radarsensor übertragen werden. Zum Bestimmen der aktuellen Lage kann dann das Empfangssignal, das mit dem Radarsensor selbst während des Messzyklus bestimmt wurde, und das von dem weiteren Radarsensor an den Radarsensor übertragene Empfangssignal genutzt werden. Somit liegen dem Radarsensor zusätzliche Informationen bezüglich der Entfernungen und/oder der Winkel zu den detektierten Referenzobjekten vor. Zur Bestimmung der aktuellen Lage können dann die Entfernungswerte und/oder die Winkelwerte die in den jeweiligen Empfangssignalen enthalten sind, verwendet werden. Die aktuelle Lage kann beispielsweise mittels Triangulation bestimmt werden. Damit kann die Bestimmung der aktuellen Lage genauer und zuverlässiger durchgeführt werden. Es kann auch vorgesehen sein, dass der Radarsensor die Empfangssignale von mehreren Radarsensoren empfängt und diese zur Bestimmung der aktuellen Lage herangezogen werden. Zudem kann der Radarsensor das bestimmte Empfangssignal auch an den weiteren Radarsensor übertragen.

Ein erfindungsgemäßer Radarsensor für ein Kraftfahrzeug ist zum Durchführen eines erfindungsgemäßen Verfahrens und der vorteilhaften Ausgestaltungen davon ausgelegt. Der Radarsensor kann zumindest eine Sendeantenne zum Aussenden der Radarsignale und zumindest eine Empfangsantenne zum Empfangen der von dem Objekt reflektierten Radarsignale aufweisen. Bevorzugt weist der Radarsensor zumindest zwei Empfangsantennen auf, wobei anhand eines Phasenunterschieds des reflektierten Radarsignals der Winkel bestimmt werden kann. Darüber hinaus kann der Radarsensor eine entsprechende Recheneinrichtung zum Bestimmen des Empfangssignals aufweisen.

Ein erfindungsgemäßes Fahrerassistenzsystem für ein Kraftfahrzeug umfasst zumindest einen erfindungsgemäßen Radarsensor. Das Fahrerassistenzsystem kann beispielsweise als Notbremsassistent, Abstandsregeltempomat, Spurwechselassistent oder Spurhalteassistent ausgebildet sein. Grundsätzlich kann mit dem Fahrerassistenzsystem eine Warnung ausgegeben werden, falls eine Kollision zwischen dem Kraftfahrzeug und dem Objekt droht.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Es kann auch vorgesehen sein, dass das Kraftfahrzeug als Nutzfahrzeug ausgebildet ist.

Die mit Bezug auf das erfindungsgemäße Verfahren vorgestellten bevorzugten Ausführungsformen und deren Vorteile gelten entsprechend für den erfindungsgemäßen Radarsensor, für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit einer Mehrzahl von Radarsensoren aufweist; und
- Fig. 2: eine Trajektorie, entlang welcher das Kraftfahrzeug zum Kalibrieren bewegt wird, wobei die Trajektorie zwischen einer Mehrzahl von Referenzobjekten hindurch führt.

In den Figuren werden gleiche und funktionsgleiche Elemente mit den gleichen Bezugszeichen versehen.

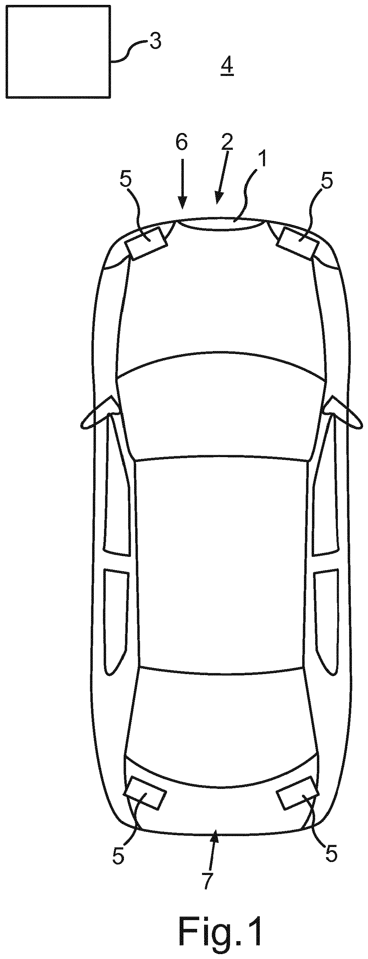

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2. Mithilfe des Fahrerassistenzsystems 2 kann ein Fahrer beim Führen des Kraftfahrzeugs 1 unterstützt werden. Das Fahrerassistenzsystem 2 kann beispielsweise als Abstandsregeltempomat, als Notbremsassistent, als Spurhalteassistent, als Spurwechselassistent oder dergleichen ausgebildet sein.

Das Fahrerassistenzsystem 2 umfasst zumindest einen Radarsensor 5, mit welchem ein Objekt 3 in einer Umgebung 4 des Radarsensors 5 beziehungsweise des Kraftfahrzeugs 1 erfasst werden kann. In dem vorliegenden Ausführungsbeispiel umfasst das Fahrerassistenzsystem 2 vier Radarsensoren 5, von denen zwei Radarsensoren 5 in einem Frontbereich 6 des Kraftfahrzeugs 1 und zwei Radarsensoren 5 in einem Heckbereich 7 des Kraftfahrzeugs 1 angeordnet sind. Die Radarsensoren 5 können beispielsweise hinter den Stoßfängern des Kraftfahrzeugs 1 angeordnet sein. Vorliegend befinden sich die Radarsensoren 5 an den jeweiligen Ecken des Kraftfahrzeugs 1. Die jeweiligen Radarsensoren 5 umfassen zumindest eine Sendeantenne zum Aussenden eines Radarsignals. Darüber hinaus umfassen die jeweiligen Radarsensoren 5 zumindest zwei Empfangsantennen, mit denen das von dem Objekt 3 reflektierte Radarsignal wieder empfangen werden kann. Mit den jeweiligen Radarsensoren 5 kann anhand der ausgesendeten und/oder empfangen Radarsignale ein Empfangssignal bereitgestellt werden. Dieses Empfangssignal beschreibt einerseits den Abstand zwischen dem Radarsensor 5 und dem Objekt 3 sowie einen Winkel zwischen dem Radarsensor 5 und dem Objekt 3.

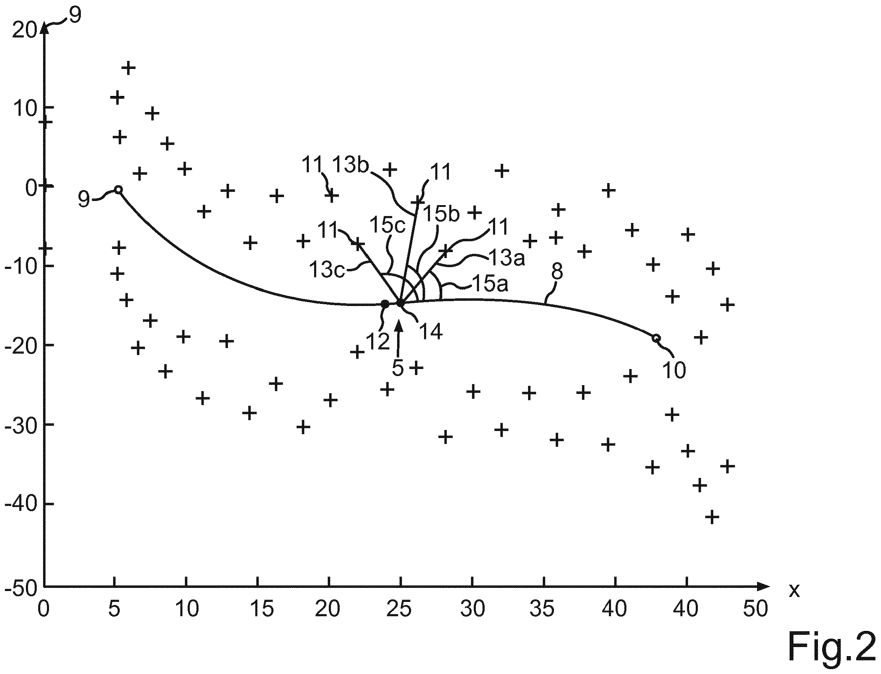

Nach der Fertigung des Kraftfahrzeugs 1 sollen die jeweiligen Radarsensoren 5 kalibriert werden. Hierzu wird eine Trajektorie 8 beziehungsweise ein Parcours bestimmt, entlang welchem das Kraftfahrzeug 1 manövriert werden soll. Eine solche Trajektorie 8 ist in Fig. 2 beispielhaft entlang der Richtungen x und y dargestellt. Die Trajektorie 8 erstreckt sich von einem Startpunkt 9 zu einem Zielpunkt 10. In der Umgebung der Trajektorie 8 befindet sich eine Mehrzahl von Referenzobjekten 11, welche vorliegend nur schematisch dargestellt sind. Diese Referenzobjekte 11 reflektieren das von dem Radarsensor 5 ausgesendete Radarsignal. Dabei kann die Trajektorie 8 vorbestimmt sein. In der Umgebung der Trajektorie 8 befinden sich keine Objekte, welche das von dem Radarsensor 5 ausgesendete Radarsignal reflektiert außer den Referenzobjekten 11. Dabei sind die jeweiligen Radarsensoren 5 für die Trajektorie 8 beziehungsweise die Referenzobjekte 11 vorkonfiguriert. Insbesondere sind die jeweiligen Positionen der Referenzobjekte 11 in den jeweiligen Radarsensoren 5 hinterlegt.

Dabei startet die Bewegung des Kraftfahrzeugs 1 an dem Startpunkt 9 mit einer ursprünglichen Ausrichtung des Kraftfahrzeugs 1. Während der Bewegung des Kraftfahrzeugs 1 entlang der Trajektorie 8 werden mit den jeweiligen Radarsensoren 5 fortlaufend Messzyklen durchgeführt. Dabei wird in jedem Messzyklus ein Empfangssignal bestimmt.

Nach jedem Messzyklus wird eine vorläufige Lage 12 des Kraftfahrzeugs 1 bestimmt. Dabei beschreibt die vorläufige Lage 12 die relative Lage des Kraftfahrzeugs 1 zu den Referenzobjekten 11 sowie die aktuelle Ausrichtung des Kraftfahrzeugs 1. Die vorläufige Lage 12 des Kraftfahrzeugs 1, welche vorliegend nur schematisch dargestellt ist, wird auf Grundlage von Odometrie bestimmt. Zu diesem Zweck kann das Kraftfahrzeug 1 einen entsprechenden Sensor aufweisen, mit dem fortlaufend die Umdrehungen zumindest eines Rades sowie der Lenkwinkel und/oder die Drehrate des Kraftfahrzeugs 1 bestimmt werden können.

Auf Grundlage des Empfangssignals, welches in dem Messzyklus bestimmt wurde, können dann die Referenzobjekte 11 erkannt werden, welche von diesem Empfangssignal beschrieben sind. Dabei beschreibt das Empfangssignal Entfernungswerte, welche die jeweiligen Entfernungen 13a, 13b, 13c zwischen dem Radarsensor 5 und den jeweiligen Referenzobjekten 11 charakterisieren. Anhand von Trilateration kann dann die aktuelle Lage 14 des Kraftfahrzeugs 1 beziehungsweise des Radarsensors 5 bestimmt werden. Die aktuelle Lage 14 beschreibt dabei die relative Lage des Kraftfahrzeugs 1 und/oder die Ausrichtung des Kraftfahrzeugs 1 zu den Referenzobjekten 11. Hierbei können die jeweiligen Referenzobjekte 11 als Beacons betrachtet werden. Zum Bestimmen der aktuellen Lage 12 ist es insbesondere vorgesehen, dass ein System von Gleichungen minimiert wird, um die "beste" aktuelle Lage 14 des Kraftfahrzeugs 1 zu bestimmen, welche mit den Entfernungswerten am besten übereinstimmt. Sobald die aktuelle Lage 14 bestimmt wurde, kann dann die vorläufige Lage 12 korrigiert werden.

Darüber hinaus ist es vorgesehen, dass anhand der bekannten Positionen der Referenzobjekte 11 sowie der aktuellen Lage 14 des Kraftfahrzeugs 1 die jeweiligen Winkel 15a, 15b, 15c zwischen dem Radarsensor 5 und den Referenzobjekten 11 berechnet werden. Diese berechneten Winkel 15a bis 15c können dann mit Winkelwerten, welche in dem Empfangssignal enthalten sind, verglichen werden. Auf Grundlage des Vergleichs kann dann die Kalibrierung des Radarsensors 5 bezüglich der Winkelmessungen durchgeführt werden. Dabei kann die Winkelmessung anhand einer Phasendifferenz der reflektierten Radarsignale zwischen den Empfangsantennen des Radarsensors 5 bestimmt werden. Hierzu können entsprechende Kalibierdaten in dem Radarsensor 5 hinterlegt werden.

Dabei ist es insbesondere vorgesehen, dass während der Bewegung des Kraftfahrzeugs 1 entlang der Trajektorie 8 fortlaufend Messzyklen mit dem Radarsensor 5 durchgeführt werden. Nach jedem Messzyklus können dann Kalibrierdaten bestimmt werden. Aus den jeweiligen Kalibrierdaten kann dann ein Mittelwert gebildet werden, auf Grundlage dessen dann die Kalibrierung durchgeführt wird. Ferner ist es insbesondere vorgesehen, dass alle Radarsensoren 5 des Fahrerassistenzsystems 2 beziehungsweise des Kraftfahrzeugs 1 während der Fahrt entlang der Trajektorie 8 kalibriert werden. Dabei kann es zudem vorgesehen sein, dass das Empfangssignal, welches mit einem Radarsensor 5 bestimmt wird, an einen anderen Radarsensor 5 übertragen wird. Hierzu können die Radarsensoren 5 zur Datenübertragung miteinander verbunden sein beziehungsweise vernetzt sein. Somit können die Radarsensoren 5 Informationen zu den Entfernungen und/oder Winkeln bezüglich der detektierten Referenzobjekte 11 austauschen. Dadurch kann die Bestimmung der aktuellen Lage 14, welche beispielsweise anhand von Trilateration bestimmt wird, verbessert werden.

## Patentansprüche

1. Verfahren zum Kalibrieren eines Radarsensors (5) eines Kraftfahrzeugs (1), bei welchem mit dem zu kalibrierenden Radarsensor (5) zumindest ein Messzyklus durchgeführt wird, wobei in dem Messzyklus mit dem Radarsensor (5) ein Empfangssignal bestimmt wird, welches eine Mehrzahl von Referenzobjekten (11), welche sich jeweils an bekannten Positionen in einer Umgebung (4) des Radarsensors (5) befinden, beschreibt, dass
das Kraftfahrzeug (1) während des Kalibrierens relativ zu den Referenzobjekten (11) bewegt wird und bei diesem Bewegen in dem zumindest einen Messzyklus anhand des Empfangssignals und den bekannten Positionen der Referenzobjekte (11) eine aktuelle Lage (14) des Kraftfahrzeugs (1) bestimmt wird, wobei das Kraftfahrzeug (1) relativ zu den Referenzobjekten (11) entlang einer Trajektorie (8) manövriert wird, wobei das Empfangssignal eine Mehrzahl der Referenzobjekte (11) beschreibt und Entfernungswerte umfasst, welche jeweils eine Entfernung (13a bis 13c) zwischen dem Radarsensor (5) und einem der Referenzobjekte (11) beschreiben, **dadurch gekennzeichnet, dass** die aktuelle Lage (14) des Kraftfahrzeugs (1) anhand der jeweiligen Entfernungswerte bestimmt wird, und
wobei der Radarsensor (5) anhand des bestimmten Empfangssignals und der aktuellen Lage (14) des Kraftfahrzeugs (1), welche eine relative Lage und eine Ausrichtung des Kraftfahrzeugs (1) zu den erkannten Referenzobjekten (11) beschreibt, kalibriert wird,
wobei das Empfangssignal zumindest einen Winkelwert umfasst, welcher einen Winkel zwischen dem Radarsensor (5) und einem der Referenzobjekte (11) beschreibt, anhand der aktuellen Lage (14) und der bekannten Positionen der Referenzobjekte (11) zumindest ein Winkel (15a bis 15c) zwischen dem Radarsensor (5) und dem einen der Referenzobjekte (11) berechnet wird und der Radarsensor (5) anhand eines Unterschieds zwischen dem Winkelwert und dem berechneten Winkel (15a bis 15c) kalibriert wird.

2. Verfahren nach Anspruch 1,
**dadurch gekennzeichnet, dass**
während des Bewegens des Kraftfahrzeugs (1) mittels Odometrie eine vorläufige Lage (12) des Kraftfahrzeugs (1) bestimmt wird und die Referenzobjekte (11) für die vorläufige Lage (12) anhand des Empfangssignals erkannt werden.

3. Verfahren nach Anspruch 2,
**dadurch gekennzeichnet, dass**
zum Bestimmen der aktuellen Lage (12) die vorläufige Lage (14) anhand der jeweiligen Entfernungswerte und den bekannten Positionen der Referenzobjekte (11) korrigiert wird.

4. Verfahren nach einem der vorhergehenden Ansprüche,
**dadurch gekennzeichnet, dass**
mit zumindest einem weiteren Umfeldsensor Sensordaten bereitgestellt werden, welche die Referenzobjekte (11) beschreiben, und die aktuelle Lage (14) zusätzlich anhand der Sensordaten bestimmt wird.

5. Verfahren nach einem der vorhergehenden Ansprüche,
**dadurch gekennzeichnet, dass**
mit dem Radarsensor (5) während des Bewegens relativ zu den Referenzobjekten (11) eine Mehrzahl von Messzyklen durchgeführt wird.

6. Verfahren nach einem der vorhergehenden Ansprüche,
**dadurch gekennzeichnet, dass**
zusätzlich zu dem Radarsensor (5) zumindest ein weiterer Radarsensor (5) während des Bewegens des Kraftfahrzeugs (1) relativ zu den Referenzobjekten (11) kalibriert wird.

7. Verfahren nach Anspruch 6,
**dadurch gekennzeichnet, dass**
das mit dem weiteren Radarsensor (5) bestimmte Empfangssignal an den Radarsensor (5) übertragen wird und die aktuelle Lage (14) zusätzlich anhand des übertragenen Empfangssignals bestimmt wird.

8. Verfahren nach einem der vorhergehenden Ansprüche,
**dadurch gekennzeichnet, dass** die jeweiligen bekannten Positionen der Referenzobjekte (11) in dem Radarsensor (5) hinterlegt sind.

9. Verfahren nach einem der vorhergehenden Ansprüche, **dadurch gekennzeichnet, dass**, nachdem die in dem Empfangssignal beschriebenen Referenzobjekte (11) erkannt wurden, anhand der Entfernungswerte die jeweilige Entfernung (13a bis 13c) zwischen dem Radarsensor (5) und den erkannten Referenzobjekten (11) bestimmt wird.

10. Verfahren nach einem der vorhergehenden Ansprüche, **dadurch gekennzeichnet, dass**, auf Grundlage des Empfangssignals die Referenzobjekte (11) erkannt werden, welche von dem Empfangssignal beschrieben werden.

11. Radarsensor (5) für ein Kraftfahrzeug (1), aufweisend zumindest eine Sendeantenne zum Aussenden von Radarsignalen, zumindest eine Empfangsantenne zum Empfangen von von einem Objekt reflektierten Radarsignalen, und eine Recheneinrichtung zum Bestimmen eines Empfangssignals, welche zum Durchführen eines Verfahrens nach einem der vorhergehenden Ansprüche ausgelegt ist.

12. Fahrerassistenzsystem (2) für ein Kraftfahrzeug (1) mit zumindest einem Radarsensor (5) nach Anspruch 11.

13. Kraftfahrzeug (1) mit einem Fahrerassistenzsystem (2) nach Anspruch 12.

## Claims

1. Method for calibrating a radar sensor (5) of a motor vehicle (1), in which the radar sensor (5) to be calibrated is used to carry out at least one measurement cycle, wherein a reception signal is determined in the measurement cycle with the radar sensor (5), which reception signal describes a plurality of reference objects (11) each situated at known positions in an environment (4) of the radar sensor (5),
the motor vehicle (1) is moved relative to the reference objects (11) during calibration and a current location (14) of the motor vehicle (1) is determined during this movement in the at least one measurement cycle on the basis of the reception signal and the known positions of the reference objects (11), wherein the motor vehicle (1) is manoeuvred along a trajectory (8) relative to the reference objects (11), wherein the reception signal describes a plurality of the reference objects (11) and comprises distance values each describing a distance (13a to 13c) between the radar sensor (5) and one of the reference objects (11), **characterized in that** the current location (14) of the motor vehicle (1) is determined on the basis of the respective distance values, and
wherein the radar sensor (5) is calibrated on the basis of the determined reception signal and the current location (14) of the motor vehicle (1), which describes a relative location and an orientation of the motor vehicle (1) with respect to the detected reference objects (11),
wherein the reception signal comprises at least one angle value describing an angle between the radar sensor (5) and one of the reference objects (11), at least one angle (15a to 15c) between the radar sensor (5) and the one of the reference objects (11) is calculated on the basis of the current location (14) and the known positions of the reference objects (11), and the radar sensor (5) is calibrated on the basis of a difference between the angle value and the calculated angle (15a to 15c).

2. Method according to Claim 1,
**characterized in that**
a preliminary location (12) of the motor vehicle (1) is determined by means of odometry while the motor vehicle (1) is moving and the reference objects (11) are detected for the preliminary location (12) on the basis of the reception signal.

3. Method according to Claim 2,
**characterized in that**
in order to determine the current location (12), the preliminary location (14) is corrected on the basis of the respective distance values and the known positions of the reference objects (11).

4. Method according to one of the preceding claims,
**characterized in that**
sensor data describing the reference objects (11) are provided using at least one further environmental sensor, and the current location (14) is additionally determined on the basis of the sensor data.

5. Method according to one of the preceding claims,
**characterized in that**
a plurality of measurement cycles are carried out with the radar sensor (5) during movement relative to the reference objects (11).

6. Method according to one of the preceding claims,
**characterized in that**
in addition to the radar sensor (5), at least one further radar sensor (5) is calibrated while the motor vehicle (1) is moving relative to the reference objects (11).

7. Method according to Claim 6,
**characterized in that**
the reception signal determined with the further radar sensor (5) is transmitted to the radar sensor (5), and the current location (14) is additionally determined on the basis of the transmitted reception signal.

8. Method according to one of the preceding claims, **characterized in that** the respective known positions of the reference objects (11) are stored in the radar sensor (5) .

9. Method according to one of the preceding claims, **characterized in that**, after the reference objects (11) described in the reception signal have been detected, the respective distance (13a to 13c) between the radar sensor (5) and the detected reference objects (11) is determined on the basis of the distance values.

10. Method according to one of the preceding claims, **characterized in that** the reference objects (11) which are described by the reception signal are detected on the basis of the reception signal.

11. Radar sensor (5) for a motor vehicle (1), having at least one transmitting antenna for emitting radar signals, at least one receiving antenna for receiving radar signals reflected by an object, and a computing device for determining a reception signal, which is designed to carry out a method according to one of the preceding claims.

12. Driver assistance system (2) for a motor vehicle (1), having at least one radar sensor (5) according to Claim 11.

13. Motor vehicle (1) having a driver assistance system (2) according to Claim 12.

## Revendications

1. Procédé d'étalonnage d'un capteur radar (5) d'un véhicule automobile (1), avec lequel au moins un cycle de mesure est effectué avec le capteur radar (5) à étalonner, un signal de réception étant déterminé dans le cycle de mesure avec le capteur radar (5), lequel décrit une pluralité d'objets de référence (11) qui se trouvent respectivement à des positions connues dans un environnement (4) du capteur radar (5), **caractérisé en ce que**
le véhicule automobile (1) est déplacé par rapport aux objets de référence (11) pendant l'étalonnage et, lors de ce déplacement, un emplacement actuel (14) du véhicule automobile (1) est déterminé dans l'au moins un cycle de mesure à l'aide du signal de réception et des positions connues des objets de référence (11), le véhicule automobile (1) étant manoeuvré par rapport aux objets de référence (11) le long d'une trajectoire (8), le signal de réception décrivant une pluralité des objets de référence (11) et comprenant des valeurs de distance qui décrivent respectivement une distance (13a à 13c) entre le capteur radar (5) et l'un des objets de référence (11), **caractérisé en ce que** l'emplacement actuel (14) du véhicule automobile (1) est déterminé à l'aide des valeurs de distance respectives, et
le capteur radar (5) étant étalonné à l'aide du signal de réception déterminé et de l'emplacement actuel (14) du véhicule automobile (1), lequel décrit un emplacement relatif et une orientation du véhicule automobile (1) par rapport aux objets de référence (11) détectés,
le signal de réception comprenant au moins une valeur angulaire, laquelle décrit un angle entre le capteur radar (5) et l'un des objets de référence (11), au moins un angle (15a à 15c) entre le capteur radar (5) et l'un des objets de référence (11) étant calculé à l'aide de l'emplacement actuel (14) et les positions connues des objets de référence (11), et le capteur radar (5) étant étalonné à l'aide d'une différence entre la valeur angulaire et l'angle calculé (15a à 15c).

2. Procédé selon la revendication 1,
**caractérisé en ce que**
pendant le déplacement du véhicule automobile (1), un emplacement provisoire (12) du véhicule automobile (1) est déterminé au moyen de l'odométrie et les objets de référence (11) pour l'emplacement provisoire (12) sont reconnus à l'aide du signal de réception.

3. Procédé selon la revendication 2,
**caractérisé en ce que**
pour déterminer l'emplacement actuel (12), l'emplacement provisoire (14) est corrigé à l'aide des valeurs de distance respectives et des positions connues des objets de référence (11).

4. Procédé selon l'une des revendications précédentes, **caractérisé en ce que**
des données de capteur qui décrivent les objets de référence (11) sont mises à disposition avec au moins un capteur d'environnement supplémentaire, et l'emplacement actuel (14) est déterminé en plus à l'aide des données de capteur.

5. Procédé selon l'une des revendications précédentes, **caractérisé en ce que**
une pluralité de cycles de mesure sont effectués avec le capteur radar (5) pendant le déplacement par rapport aux objets de référence (11).

6. Procédé selon l'une des revendications précédentes, **caractérisé en ce que**
en plus du capteur radar (5), au moins un capteur radar (5) supplémentaire est étalonné pendant le déplacement du véhicule automobile (1) par rapport aux objets de référence (11) .

7. Procédé selon la revendication 6,
**caractérisé en ce que**
le signal de réception déterminé avec le capteur radar (5) supplémentaire est transmis au capteur radar (5) et l'emplacement actuel (14) est déterminé en plus à l'aide du signal de réception transmis.

8. Procédé selon l'une des revendications précédentes, **caractérisé en ce que** les positions connues respectives des objets de référence (11) sont mémorisées dans le capteur radar (5).

9. Procédé selon l'une des revendications précédentes, **caractérisé en ce que**, après que les objets de référence (11) décrits dans le signal de réception ont été reconnus, la distance (13a à 13c) respective entre le capteur radar (5) et les objets de référence reconnus (11) est déterminée à l'aide des valeurs de distance.

10. Procédé selon l'une des revendications précédentes, **caractérisé en ce que**, sur la base du signal de réception, les objets de référence (11) reconnus sont ceux qui sont décrits par le signal de réception.

11. Capteur radar (5) pour un véhicule automobile (1), possédant au moins une antenne d'émission destinée à émettre des signaux radar, au moins une antenne de réception destinée à recevoir des signaux radar réfléchis par un objet, et un dispositif de calcul destiné à déterminer un signal de réception, lequel est conçu pour mettre en œuvre un procédé selon l'une des revendications précédentes.

12. Système d'aide à la conduite (2) pour un véhicule automobile (1), comprenant au moins un capteur radar (5) selon la revendication 11.

13. Véhicule automobile (1) comprenant un système d'aide à la conduite (2) selon la revendication 12.
